# EUROPÄISCHE PATENTSCHRIFT

(11) **EP 0 543 961 B1**
(45) Veröffentlichungstag und Bekanntmachung des Hinweises auf die Patenterteilung: **18.09.1996**
(21) Anmeldenummer: 92910464.4
(22) Anmeldetag: 30.05.1992
(51) Int. Cl.: C03C 23/00

(54) **VERFAHREN ZUR EMISSIONSFREIEN, INSBESONDERE FCKW-FREIEN, REINIGUNG VON PRÄZISIONS-OPTIKEN BZW. -OPTIKBAUGRUPPEN**
PROCESS FOR CLEANING PRECISION OPTICS OR OPTICAL ASSEMBLIES WITHOUT PRODUCING EMISSIONS, ESPECIALLY CFCs
PROCEDE DE NETTOYAGE D'ELEMENTS OU D'ENSEMBLES D'ELEMENTS OPTIQUES DE PRECISION SANS EMISSIONS, NOTAMMENT SANS EMISSION DE CFC

(30) Priorität: 19.06.1991 DE 4120202
(43) Veröffentlichungstag der Anmeldung: 02.06.1993
(73) Patentinhaber: LEICA MIKROSKOPIE UND SYSTEME GmbH, D-35530 Wetzlar (DE); FRAUNHOFER-GESELLSCHAFT ZUR FÖRDERUNG DER ANGEWANDTEN FORSCHUNG E.V., 80636 München (DE)
(72) Erfinder: PREUSSNER, Elke, D-2863 Ritterhude (DE); GRÜNWALD, Heinrich, D-7413 Gomaringen (DE); SCHEERER, Friedrich, D-6336 Solms-Niederbiel (DE)
(74) Vertreter: Stamer, Harald, Dipl.-Phys.
(86) Internationale Anmeldenummer: DE9200440
(87) Internationale Veröffentlichungsnummer: WO9222508

(56) Entgegenhaltungen:
- CH-A- 320 698
- DE-A- 2 328 164
- DE-B- 1 083 990
- FR-A- 978 448
- FR-A- 978 449
- FR-A- 1 074 724
- FR-A- 1 144 528

## Beschreibung

Die Erfindung betrifft ein Verfahren zur Reinigung von Präzisions-Optiken bzw. Präzisions-Optikbauteilen, wobei keine organischen Lösungsmittel verwendet werden und demzufolge auch keine schädlichen Emissionen entstehen. Insbesondere handelt es sich um einen FCKW-freien Reinigungs-Prozeß ("FCKW" = Fluor-Chlor-Kohlenwasserstoffe).

Im optischen Präzisionsgerätebau ist es seit langer Zeit bekannt, klassische Ultraschall-Reinigungs-Verfahren zur Reinigung von Linsen, Prismen und anderen Optik-Komponenten einzusetzen. Dabei folgt auf eine wässrige Reinigungsstufe eine Entwässerungs-Behandlung und sodann eine Trocknungs-Behandlung. Die wässrige Reinigungsstufe verwendet beispielsweise ein temperiertes netzmittelhaltiges Bad oder ein Tauchspülbad mit deionisiertem Wasser mit einer Leitfähigkeit von ca. 10 µS.

Die Entwässerungsstufe besteht aus einem Tauchbad aus Alkohol/lsopropanol. Die Trocknungs-Stufe ist durch eine Tauchbad-Behandlung mit Trichlorethen oder eine Dampfbad-Behandlung mit Trichlorethen-Dampf gekennzeichnet. Die Trocknung kann beispielsweise mittels Warmluft-Zufuhr bei Temperaturen zwischen 50 und 80°C erfolgen.

Nachteile dieser klassischen Ultraschall-Reinigungsverfahren bestehen u. a. darin, daß bei Verwendung von Alkohol Explosionsgefahr besteht, daß die Mischbarkeit mit Wasser keine eigentlich wünschenswerte Wasserverdrängung hervorruft, sondern lediglich eine Verminderung der Schichtdicke der auf der Glasoberfläche befindlichen Wasserhaut in Abhängigkeit von der Temperatur und den physikalisch-chemischen Eigenschaften der Glasoberfläche bewirkt. Außerdem resultiert daraus eine wesentlich stärkere Korrosion der polierten Glasoberfläche; dies gilt insbesondere bei Behandlung mit Alkohol-Dampf. Der Einsatz von Trichlorethen macht einen großen apparativen Aufwand für eine einwandfreie Absaugung erforderlich. Außerdem kann eine durch Schwermetall-Katalyse entstandene Salzsäure eine sehr starke Korrosion der Glasoberfläche hervorrufen. Schließlich hinterlassen sogenannte "Stabilisatoren" eine für das Belegen oder das Verkleben oder das Lackieren der Glasoberfläche störende Schicht. Daraus resultiert eine stark verminderte Haftung bzw. Tropenbeständigkeit der entsprechend behandelten Optikbauteile.

Es sind darüber hinaus Ultraschall-Reinigungsanlagen für die weiter oben beschriebenen Verwendungszwecke bekannt, bei denen nach einer Vorbehandlung mit einer wässrigen Lösung sodann eine Entwässerungs-Stufe folgt, in der Alkohol bzw. Isopropanol eingesetzt wird. Dabei wird von der Methode Gebrauch gemacht, daß die an der Glasoberfläche anhaftende Wasserhaut nicht durch einen Verdünnungseffekt, sondern durch eine Wasserverdrängung entfernt wird. Hierbei leisten FCKW's, beispielsweise mit Emulgatoren versehen, an sich wertvolle Dienste.

Die zwingende Notwendigkeit einer drastischen Reduzierung des FCKW-Verbrauchs bzw. - rigoroser formuliert - der vollständige Verzicht auf FCKW und andere chlorhaltige Verbindungen hat zunächst die seit langem bekannten "klassischen" Verfahren wieder aufleben lassen. Diese aus globalökologischen Gründen erforderliche Rückkehr zu den Verfahren der 50iger und 60iger Jahre stellt - isoliert betrachtet - natürlich einen technologischen Rückschritt dar. An dieser Stelle muß betont werden, daß die bekannten Lösungsmittel, wie Alkohole, Ketone, Keto-Esther und Äther, nur für chemisch stabile Glasarten anwendbar sind. Allen bekannten Verfahren haften jedoch neben den schon genannten umweltspezifischen Nachteilen folgende Mängel an: Die Sauberkeit der Glasoberflächen in Abhängigkeit von der Glasart ist oftmals nicht zufriedenstellend, und die Behandlung der Glasoberfläche führt zu einer starken Korrosion und damit zu einer gravierenden Qualitäts-Einbuße.

Es ist daher die Aufgabe der vorliegenden Erfindung, ein Verfahren zur umweltgerechten Reinigung von Präzisions-Bauteilen für die Optik anzugeben, wobei zusätzlich sicherzustellen ist, daß auch diejenigen Glasarten dem erfindungsgemäßen Reinigungsverfahren unterworfen werden können, die eine geringe bzw. eine stark verminderte chemische Stabilität aufweisen. Vor allem ist durch das neue Verfahren sicherzustellen, daß keinerlei Emissionen von den zu verwendenden Behandlungs-Bädern, insbesondere keine FCKW-Emissionen, erfolgen.

Die Aufgabe wird erfindungsgemäß durch ein Verfahren der eingangs genannten Art mit den kennzeichnenden Merkmalen des Hauptanspruchs gelöst. Vorteilhafte Ausgestaltungen ergeben sich aus den Unteransprüchen. Die Präzisions-Optiken bzw. -Optikbauteile bzw. -Optikbaugruppen, die dem erfindungsgemäßen Verfahren unterworfen werden können, bestehen beispielsweise aus optischen Gläsern, aus Kunststoffen, aus Metallen bzw. aus anorganischen oder organischen Kristallen. Der Reinigungsprozeß kann in einen Vorbehandlungs-Prozeß (Vorstufe) und in einen Hauptbehandlungs-Prozeß untergliedert werden. Zunächst folgt ein Reinigen in einem Bad, das konzentrationsgepuffertes Leitungswasser enthält, dem Tenside als Netzmittel hinzugesetzt sind. Hierbei handelt es sich nicht um eine übliche p_{H}-Pufferung, sondern um eine Pufferung in Form einer definiert vorgegebenen lonenkonzentration unter Verwendung von Na-, K-, Mg- und/oder NH₄-Chloriden in einer Konzentration zwischen 0,5 bis 2 Gewichtsprozent. Die Konzentration kann in Abhängigkeit der jeweils zu reinigenden Glasarten innerhalb des angegebenen Intervalls optimiert werden. Eine Umwälzung dieses Reinigungsbades ist vorgesehen, wobei zusätzlich eine Feinstfilterung vorgenommen wird. Besonders vorteilhaft ist der Einsatz eines Ultraschall-Bades, bei dem die Frequenz und die Amplitude variabel sind, so daß ein bestimmter Frequenzbereich kontinuierlich durchgefahren werden kann.

Bei der zweiten Prozeß-Stufe der Vorbehandlungs-Prozedur wird in einem Bad mit konzentrationsgepuffertem Leitungswasser gespült. Dieses Bad enthält keine Netzmittel. Die Prozeß-Stufen (a1) und (a2) dienen der Verhinderung des Auslaugens der Alkali-Ionen, die im Glas enthalten sind (Verringerung der Glas-"Korrosion"). Es folgt sodann ein Reinigungsbad, das hinsichtlich seiner chemischen Zusammensetzung und seiner Anwendungs-Parameter identisch mit dem Reinigungsbad gemäß der Prozeß-Stufe (a1) ist. Danach wird in einem Bad gespült, welches hinsichtlich seines Chemismus' und seiner Einsatz-Parameter mit dem Spülbad gemäß Prozeß-Stufe (a2) identisch ist. Es folgt ein Spülen in einem Bad, das gepuffertes deionisiertes Wasser enthält. Schließlich werden die so vorbehandelten Optikbauteile in einem Brause-Strahl mit deionisiertem Wasser "abgeduscht". Hierbei wird das gepufferte deionisierte Wasser von der Glasoberfläche restlos entfernt. Auf diese Weise wird die Ansammlung von Salzrückständen auf der Glasoberfläche wirkungsvoll verhindert.

Im weiteren Verlauf des Reinigungsprozesses werden nunmehr die organischen Verunreinigungen und die Tensid-Reste bis zum Kohlendioxid (CO₂) abgebaut. Dies kann entweder mittels kurzwelliger UV-Strahlung oder hochbeschleunigter Elektronen-Strahlung oder mittels Glimmentladung geschehen. Die dabei jeweils zu wählende Behandlungs-Atmosphäre kann entweder aus einer Sauerstoff-Atmosphäre unter Normaldruck-Bedingungen und einer Sauerstoff-Atmosphäre (bis 5 bar) oder einer Ozon-Atmosphäre (drucklos) oder einer Ozon-Atmosphäre (bis 2 bar) bestehen. Hieran schließt sich eine Untersuchung der Grenzflächen der Optiken bzw. Optikbauteile hinsichtlich der Reaktionen mit organischen Radikalen, der Abbaureaktionen an der Substratoberfläche und der Änderungen der Oberflächengeometrie (mittels Interferometrie) an.

Es folgt der eigentliche, aus den nachfolgenden alternativen Prozeßfolgen (d1A) bis (d3A) bzw. (d1B) bis (d3B) bestehende Hauptbehandlungs-Prozeß, bei dem es also entweder zu einer Verdrängung des Wassers auf der Substratoberfläche mittels nicht-flüchtiger, hydrophober, reaktiver Substanzen kommt, die unter den in der nachfolgenden Prozeß-Stufe (d2A) genannten Bedingungen auf der Substratoberfläche eine Filmschicht mit einer Dicke zwischen 10 und 100 nm bilden, sodann zu einem Versiegeln der Oberflächen durch Filmbildung mit Hilfe von UV- bzw. Elektronenstrahlung und danach zum Beschichten der Oberflächen, wobei entweder durch Glimmen ein Abbau der Oberflächenversiegelungsschicht zum Metalloxid oder durch Glimmen eine Aktivierung der Oberflächenversiegelungsschicht erfolgt, oder zu einem Verdrängen des Wassers auf der Substratoberfläche mittels nicht-flüchtiger, hydrophober, reaktiver Substanzen kommt, die unter den in der nachfolgenden Prozeß-Stufe (d3B) genannten Bedingungen leicht abbaubar sind. Danach wird die Oberfläche durch Filmbildung mit Hilfe von UV- und/oder Elektronen-Strahlung versiegelt, und schließlich erfolgt ein Abbauen bzw. Umwandeln des Wasserverdrängers zu Kohlendioxid durch UV- bzw. Elektronenbestrahlung in Sauerstoff- bzw. Ozon-Atmosphäre.

Nach einer alternativen Variante des erfindungsgemäßen Reinigungsverfahrens umfaßt der Hauptbehandlungs-Prozeß zusätzlich folgende Prozeß-Stufen: Gefriertrocknen bei Temperaturen von etwa -20°C und Drucken von etwa 0,001 mbar und Feinstreinigen mittels UV- oder Elektronenstrahlung sowie Glimmen in Sauerstoff- bzw. Ozon-Atmosphäre.

Die erwähnten nicht-flüchtigen, hydrophoben Substanzen können siliziumorganische Verbindungen, beispielsweise Polysilane oder Polysiloxane, oder perfluorierte Verbindungen sein.

Nach einer besonders vorteilhaften Variante des erfindungsgemäßen Verfahrens kann die Erzeugung einer vorzugsweise an Alkali-lonen verarmten Oberfläche unter Einfluß eines Plasmas erfolgen. Nach vollzogenem Gesamtreinigungs-Prozeß erfolgt in den Fällen, in denen es sich bei den Optikbauteilen um Komponenten aus Metallen oder Kunststoffen handelt, die Montage zu kompletten Geräten bzw. Geräte-Modulen ("montagereife Reinigung"). Für den Fall, daß es sich bei den Optikbauteilen um Materialien aus optischen Gläsem handelt, erfolgt sodann eine "Belegung" der gereinigten Substratoberflächen, also beispielsweise durch Auftragen eines optischen Kittes oder mindestens einer Vergütungsschicht.

Zur Realisierung eines emissionsfreien Reinigungs-Verfahrens gemäß der vorliegenden Erfindung sind weitere Zwischen-Varianten möglich.

## Patentansprüche

1. Verfahren zur emissionsfreien Reinigung von Präzisions-Optiken bzw. Präzisions-Optikbauteilen, gekennzeichnet durch die folgenden Verfahrensstufen:
a) Vorbehandlungs-Prozeß, bestehend aus den nachfolgenden Prozeß-Stufen:
a1) Reinigen in einem Reinigungsbad, welches konzentrationsgepuffertes Leitungswasser enthält, dem Tenside als Netzmittel zugesetzt sind, wobei eine Badumwälzung mittels zusätzlicher Feinstfilterung vorgesehen ist und eine Einwirkung mittels Ultraschalls mit vorzugsweise variablen Frequenzen und Amplituden erfolgt;
a2) Spülen mit netzmittelfreiem, konzentrationsgepuffertem Leitungswasser, wobei gleichzeitig eine Frischwasser-Feinstfilterung vorgenommen wird und ebenfalls eine Einwirkung mittels Ultraschalls gemäß der Prozeß-Stufe (a1) erfolgt;
a3) erneutes Reinigen gemäß der Prozeß-Stufe (a1);
a4) erneutes Spülen gemäß der Prozeß-Stufe (a2);
a5) Spülen mit konzentrationsgepuffertem, deionisiertem Wasser unter Einwirkung mittels Ultraschalls gemäß der Prozeß-Stufe (a1);
a6) Brausen mit deionisiertem Wasser unter gleichzeitiger Frischwasser-Feinstfilterung;
b) Abbauen bzw. Umwandeln von organischen Verunreinigungen sowie der Tensid-Reste bis zum Kohlendioxid mittels
b1) kurzwelliger UV-Strahlung;
b2) hochbeschleunigter Elektronen oder
b3) Glimmentladung; unter Erzeugung bzw. Aufrechterhaltung
b4) einer Normaldruck-Sauerstoffatmosphäre oder
b5) einem bis zu 5 bar betragenden Sauerstoffatmosphären-Druck oder
b6) einer Normaldruck-Ozonatmosphäre oder
b7) einem bis zu 2 bar betragenden Ozonatmosphären-Druck;
c) Überprüfen der Grenzflächen der Optiken bzw. Optikbauteile in bezug auf
c1) Raktionen mit organischen Radikalen;
c2) Abbaureaktionen an der Substratoberfläche;
c3) Änderungen der Oberflächengeometrie;
d) Hauptbehandlungsprozeß, bestehend aus den nachfolgenden alternativen Prozeßfolgen (d1A) bis (d3A) bzw. (d1B) bis (d3B), also entweder:
d1A) Verdrängen des Wassers auf der Substratoberfläche mittels nicht-flüchtiger, hydrophober, reaktiver Substanzen, die unter den in der nachfolgenden Prozeß-Stufe (d2A) genannten Bedingungen auf der Substratoberfläche eine Filmschicht mit einer Dicke zwischen 10 und 100 nm bilden;
d2A) Versiegeln der Oberflächen durch Filmbildung mit Hilfe von UV- bzw. Elektronenstrahlung;
d3A) Beschichten der Oberflächen, wobei entweder durch Glimmen ein Abbau der Oberflächenversiegelungsschicht zum Metalloxid oder durch Glimmen eine Aktivierung der Oberflächenversiegelungsschicht erfolgt;
oder:
d1B) Verdrängen des Wassers auf der Substratoberfläche mittels nicht-flüchtiger, hydrophober, reaktiver Substanzen, die unter den in der nachfolgenden Prozeß-Stufe (d3B) genannten Bedingungen leicht abbaubar sind;
d2B) Versiegeln der Oberflächen durch Filmbildung mit Hilfe von UV- bzw. Elektronenstrahlung;
d3B) Abbauen bzw. Umwandeln des Wasserverdrängers zu Kohlendioxid durch UV- bzw. Elektronenbestrahlung in Sauerstoff- bzw. Ozon-Atmosphäre.

2. Verfahren nach Anspruch 1, dadurch gekennzeichnet, daß der Hauptbehandlungs-Prozeß zusätzlich folgende Prozeß-Stufen umfaßt:
d4) Gefriertrockenen bei Temperaturen von etwa -20°C und Drucken von etwa 0,001 mbar;
d5) Feinstreinigung mittels UV- oder Elektronenstrahlung und Glimmen in Sauerstoff- bzw. Ozon-Atmosphäre.

3. Verfahren nach mindestens einem der vorherigen Ansprüche, dadurch gekennzeichnet, daß die in der Prozeß-Stufe (d1) genannten nicht-flüchtigen, hydrophoben Substanzen siliziumorganische Verbindungen, wie Polysilane und Polysiloxane, oder perfluorierte Verbindungen sind.

4. Verfahren nach mindestens einem der Ansprüche 1-3, dadurch gekennzeichnet, daß die Erzeugung einer vorzugsweise an Alkali-lonen verarmten Oberfläche unter Einfluß eines Plasmas erfolgt.

5. Verfahren nach mindestens einem der vorherigen Ansprüche, dadurch gekennzeichnet, daß nach Abschluß der Behandlungs-Prozesse eine Belegung der gereinigten Substratoberflächen, z. B. Aufbringen einer Kitt- oder einer Vergütungsschicht, erfolgt.

## Claims

1. Method for the emission-free cleaning of precision optical systems or precision optical components, characterised by the following method steps:
a) preliminary treatment process consisting of the following process stages:
a1) cleaning in a cleaning bath which contains concentration-buffered mains water, to which tensides are added as wetting agents, wherein a bath circulation by means of additional finest filtration is provided and an action by means of ultrasonic vibration with preferably variable frequencies and amplitudes takes place:
a2) rinsing with concentration-buffered mains water free of wetting agent, wherein a fresh water finest filtration is undertaken at the same time and an action by means of ultrasonic vibration likewise takes place according to the process stage (a1);
a3) renewed cleaning according to the process stage (a1);
a4) renewed rinsing according to the process stage (a2),
a5) rinsing with concentration-buffered deionised water under an action by means of ultrasonic vibration according to the process stage (a1);
a6) spraying with deionised water with simultaneous fresh water finest filtration;
b) decomposing or converting of organic contaminations as well as the tenside residues to carbon dioxide by means of
b1) short-wave ultraviolet radiation,
b2) highly accelerated electrons or
b3) glow discharge
with the production or maintenance of
b4) a normal pressure oxygen atmosphere or
b5) an oxygen atmosphere pressure amounting up to 5 bars or
b6) a normal pressure ozone atmosphere or
b7) an ozone atmosphere pressure amounting up to 2 bars;
c) checking of the boundary surfaces of the optical systems or optical components in respect of
c1) reactions with organic radicals,
c2) decomposition reactions at the substrate surface and
c3) changes in the surface geometry;
d) main treatment process consisting of the following alternative process sequences (d1A) to (d3A) or (d1B) to (d3B), thus either:
d1A) displacement of the water on the substrate surface by means of non-volatile hydrophobic reactive substances which under the conditions mentioned in the following process stage (d2A) form a film layer with a thickness of between 10 to 100 nanometres on the substrate surface;
d2A) sealing of the surfaces by film formation with the aid of ultraviolet or electron radiation;
d3A) coating of the surfaces, for which either a decomposition of the surface sealing layer to metal oxide takes place by glowing or an activation of the surface sealing layer takes place by glowing.
or
d1B) displacement of the water on the substrate surface by means of non-volatile hydrophobic reactive substances which are easily decomposable under the conditions mentioned in the following process stage (d3B);
d2B) sealing of the surfaces by film formation with the aid of ultraviolet or electron radiation;
d3B) decomposition or conversion of the water-displacing means to dioxide by ultraviolet or electron radiation in an oxygen or ozone atmosphere.

2. Method according to claim 1, characterised thereby, that the main treatment process additionally comprises the following process stages:
d4) freeze-drying at temperatures of about -20°C and pressures of about 0.001 millibars and
d5) finest cleaning by means of ultraviolet or electron radiation in an oxygen or ozone atmosphere.

3. Method according to at least one of the preceding claims, characterised thereby, that the non-volatile hydrophobic substances mentioned in the process stage (d1) or silicon-organic compounds, such as polysilanes and polysiloxanes, or perfluorinated compounds.

4. Method according to at least one of the claims 1 to 3, characterised thereby, that the production of a surface preferably depleted of alkali ions takes place under the influence of a plasma.

5. Method according to at least one of the preceding claims, characterised thereby, that a coating of the cleaned substrate surfaces, for example an application of a cement layer or an antireflection layer, takes place after conclusion of the treatment processes.

## Revendications

1. Procédé pour le nettoyage, sans émission, d'éléments ou de pièces optiques de précision caractérisé par les étapes de procédé qui suivent :
a) Processus de pré-traitement se composant des étapes suivantes de processus :
a1) Nettoyage dans un bain de nettoyage qui contient de l'eau de conduite tamponnée par concentration, à laquelle sont ajoutés des agents tensioactifs en tant qu'agents mouillants, et une circulation du bain est prévue au moyen d'une filtration supplémentaire des matières fines et il se produit une action au moyen d'ultrasons avantageusement à des fréquences et amplitudes variables.
a2) Rinçage avec de l'eau de conduite sans agents mouillants, tamponnée par concentration, et en même temps est entreprise une filtration des matières fines à l'eau fraîche et également une action au moyen d'ultrasons selon l'étape de processus (a1) ;
a3) Nouveau nettoyage selon l'étape de processus (a1) ;
a4) Nouveau rinçage selon l'étape de processus (a2) ;
a5) Rinçage avec eau désionisée tamponnée par concentration avec action au moyen de l'ultrason selon l'étape de processus (a1);
a6) Douchage à l'eau désionisée avec filtration simultanée des matières fines-eau fraîche.
b) Décomposition respectivement, transformation des impuretés ou organiques ainsi que des résidus tensioactifs jusqu'au gaz carbonique au moyen de
b1) Rayonnement UV de courte longueur d'onde
b2) Electrons fortement accélérés ou
b3) Décharge lumineuse : avec production ou respectivement maintien
b4) d'une atmosphère d'oxygène à pression normale ou
b5) d'une atmosphère d'oxygène à 5 bars de pression ou
b6) d'une atmosphère d'ozone à pression normale ou
b7) d'une pression d'atmosphère d'ozone pouvant atteindre 2 bars
c) Examen des surfaces limites des éléments optiques ou, respectivement des pièces optiques en ce qui concerne
c1) les réactions avec des radicaux organiques ;
c2) les réactions de décomposition à la surface du substrat ;
c3) les modifications de la géométrie à la surface
d) Processus de traitement principal se composant des étapes alternatives de processus qui suivent (d1A) à (d3A) ou, respectivement, (d1B) à (D3B), c'est-à-dire soit :
d1A) Déplacement de l'eau à la surface du substrat au moyen de substances non volatiles, hydrophobes, réactives qui, dans les conditions nommées dans l'étape subséquente du processus (d2A), forment, à la surface du substrat, une couche pelliculaire d'une épaisseur comprise entre 10 et 100 nm ;
d2A) Vitrification de la surface par formation d'un film à l'aide d'un rayonnement UV ou, respectivement, d'électrons ;
d3A) Enduction de la surface où il se produit, soit, par décharge lumineuse une décomposition de la couche de vitrification de surface en oxyde métallique ou bien, par décharge lumineuse, une activation de la couche de vitrification de surface;
soit
d1B) Déplacement de l'eau à la surface du substrat au moyen de substances non volatiles, hydrophobes, réactives qui sont facilement décomposables dans les conditions indiquées à l'étape subséquente du processus (d3B) ;
d2B) Vitrification de la surface par formation d'un film à l'aide d'un rayonnement UV ou respectivement d'électrons ;
d3B) Décomposition ou, respectivement, transformation du déplaceur d'eau en bioxyde de carbone par rayonnement UV ou, respectivement, d'électrons dans une atmosphère d'oxygène ou respectivement d'ozone.

2. Procédé selon la revendication 1, caractérisé en ce que le processus de traitement principal comporte de plus les étapes suivantes de processus :
d4) Lyophilisation à des températures d'environ - 20°C et à des pressions 0,001 mbar.
d5) Nettoyage très fin au moyen d'un rayonnement UV ou d'électrons et décharge lumineuse dans une atmosphère d'oxygène ou respectivement d'ozone.

3. Procédé selon au moins l'une des revendications précédentes, caractérisé en ce que les substances non volatiles, hydrophobes, nommées à l'étape de processus (d1) sont des composés de silicium organique comme du polysilane et du polysiloxane ou bien des composés perfluorés.

4. Procédé selon au moins l'une des revendications 1-3, caractérisé en ce que la production d'une surface avantageusement appauvrie en ions alcalins est obtenue sous l'influence d'un plasma.

5. Procédé selon au moins l'une des revendications précédentes, caractérisé en ce qu'à la fin du processus de traitement, il se produit une application à la surface nettoyée du substrat, par exemple application d'une couche de ciment ou d'un agent anti-reflets.
